# EUROPEAN PATENT APPLICATION

(11) **EP 4 030 589 A1**
(43) Date of publication of application: **20.07.2022**
(21) Application number: 21201145.6
(22) Date of filing: 06.10.2021
(51) Int. Cl.: H02K 1/16, H02K 1/276, H02K 7/18

(54) **PERMANENT MAGNET GENERATOR FOR OCEAN ENERGY CONVERSION**

(30) Priority: 13.01.2021 TW 110101237
(71) Applicant: TRB Green Technology Co., Ltd., New Taipei City 235 (TW)
(72) Inventor: Han, Chih-Shiang, 248 New Taipei City (TW); Chuang, Min-Chieh, 241 New Taipei City (TW)
(74) Representative: Straus, Alexander

(57) **Abstract**

A permanent magnet generator(1) for ocean energy conversion includes a stator structure(12) and a rotor structure(11). The stator structure(12) includes a stator body(121) whereon a plurality of stator slots(1211) are formed. The rotor structure(11) includes a rotor body(111) whereon a plurality of rotor slots(1111) are formed. The rotor body(111) is disposed inside the rotor body(111) in a swinging or rotatable manner. A ratio of a number of the rotor slots(1111) to a number of the stator slots(1211) is 8 to 9. The number of the rotor slots(1111) is at least equal to 64. The number of the stator slots(1211) is at least equal to 72. The permanent magnet generator(1) requires a low speed/angle of a swinging/rotating movement of the rotor body(111) relative to the stator body(121) to generate electricity, and therefore, it facilitates electricity generation from ocean energy.

## Description

### Field of the Invention

The present invention relates to a permanent magnet generator for ocean energy conversion according to the pre-characterizing clause of claim 1.

### Background of the Invention

A permanent magnet generator is provided with permanent magnets disposed on a rotor and utilizes various powers to drive the rotor to rotate relative to a stator to cause a magnetic field variation for electricity generation. However, the conventional permanent magnet generator requires a higher speed and a larger angle of a rotating movement of the rotor for electricity generation. Therefore, the conventional permanent magnet generator is not suitable for ocean energy conversion.

### Summary of the Invention

This is mind, the present invention aims at providing a permanent magnet generator for ocean energy conversion.

This is achieved by a permanent magnet generator according to claim 1. The dependent claims pertain to corresponding further developments and improvements.

As will be seen more clearly from the detail description following below, the claimed permanent magnet generator includes a stator structure and a rotor structure. The stator structure includes a stator body. A plurality of stator slots is formed on the stator body. The rotor structure includes a rotor body. The rotor body is disposed inside the stator body in a swinging manner or a rotating manner. A plurality of rotor slots is formed on the rotor body. A ratio of a number of the plurality of rotor slots to a number of the plurality of stator slots is 8:9. The number of the plurality of rotor slots is at least equal to 64, and the number of the plurality of stator slots is at least equal to 72.

According to an embodiment of the present invention, a central axis of the stator body is coincided with a central axis of the rotor body. The plurality of stator slots are arranged along a circumferential direction of the stator body, and the plurality of rotor slots are arranged along a circumferential direction of the rotor body.

According to an embodiment of the present invention, each of the stator body and the rotor body is a circular column.

According to an embodiment of the present invention, the rotor structure further includes a plurality of permanent magnets respectively disposed inside the plurality of rotor slots, and a number of the plurality of permanent magnets is identical to the number of the plurality of rotor slots.

According to an embodiment of the present invention, the stator structure further includes a plurality of stator coils wrapped around the plurality of the stator slots.

According to an embodiment of the present invention, the stator structure further includes a shell, and the stator body is fixedly disposed inside the shell.

According to an embodiment of the present invention, the rotor structure further includes a connecting shaft coupled to the rotor body, and the connecting shaft passes through the shell.

According to an embodiment of the present invention, the stator body is formed by a plurality of silicon steel sheets.

According to an embodiment of the present invention, the rotor body is formed by a plurality of silicon steel sheets.

In summary, in the present invention, the ratio of the number of the plurality of rotor slots to the number of the plurality of stator slots is 8:9. The number of the plurality of rotor slots and the number of the plurality of stator slots are at least equal to 64 and 72 respectively. Due to the aforementioned configuration, the permanent magnet generator only requires a low speed and a small angle of a rotating movement or a swinging movement of the rotor body relative to the stator body, so as to generate electricity. In other words, in a condition of a low speed and a small angle of the rotating movement or the swinging movement of the rotor body relative to the stator body, a magnetic flux variation of the permanent magnet generator can cause the stator structure to generate an electrical current. Therefore, the present invention is suitable for the ocean energy conversion.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a schematic diagram of a permanent magnet generator according to an embodiment of the present invention,
FIG. 2 is a partial diagram of the permanent magnet generator according to the embodiment of the present invention,
FIG. 3 is a partial exploded diagram of the permanent magnet generator according to the embodiment of the present invention,
FIG. 4 is a partial sectional diagram of the permanent magnet generator according to the embodiment of the present invention, and
FIG. 5 is a diagram of the permanent magnet generator in a used state according to the embodiment of the present invention.

### Detailed Description

In the following detailed description of the preferred embodiments, reference is made to the accompanying drawings which form a part hereof, and in which is shown by way of illustration specific embodiments in which the invention may be practiced. In this regard, directional terminology, such as "top", "bottom", "front", "back", etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive. Also, the term "connect" or "couple" is intended to mean either an indirect or direct electrical/mechanical connection. Thus, if a first device is connected to or coupled to a second device, that connection may be through a direct electrical/mechanical connection, or through an indirect electrical/mechanical connection via other devices and connections.

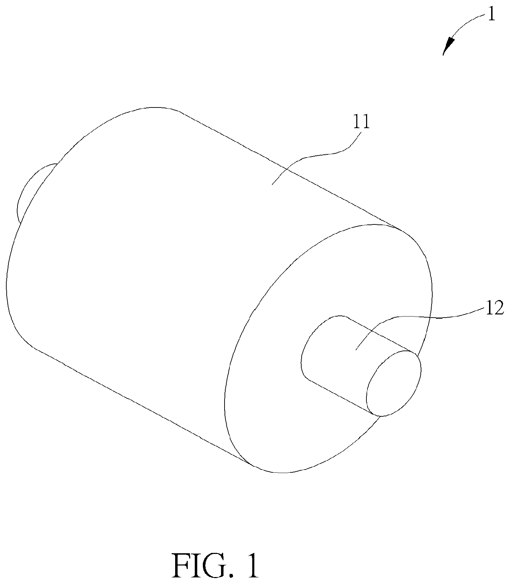

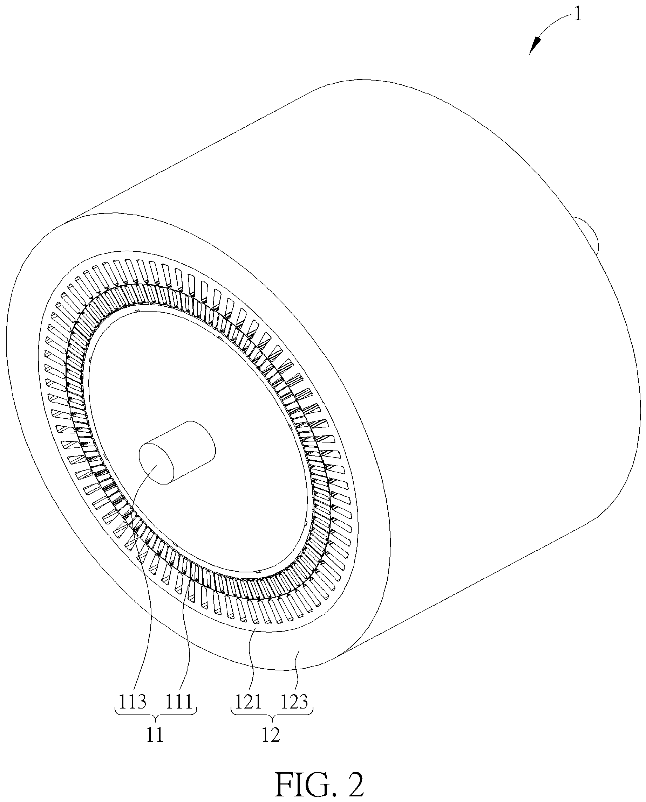

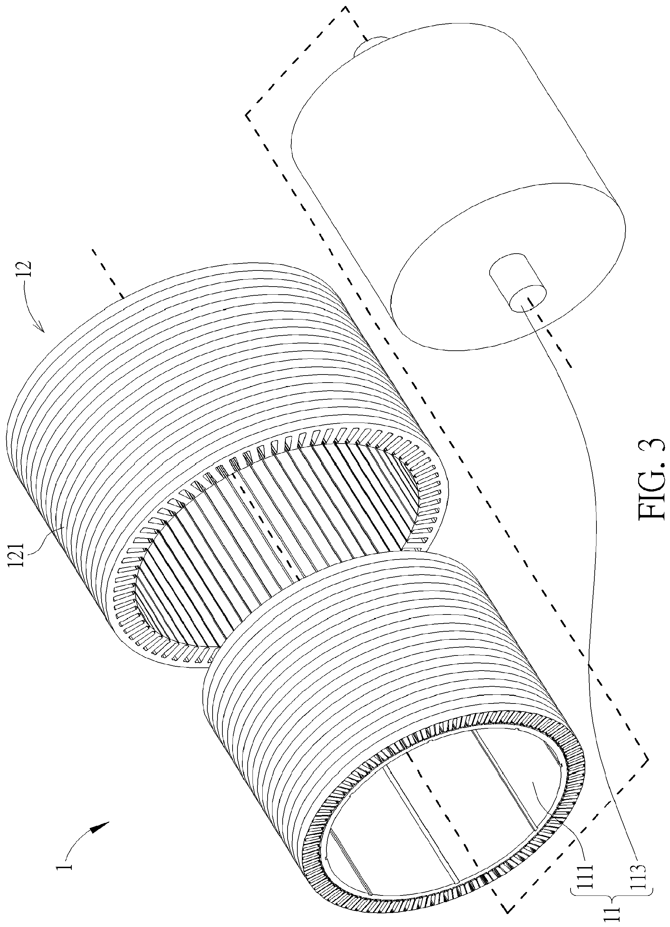

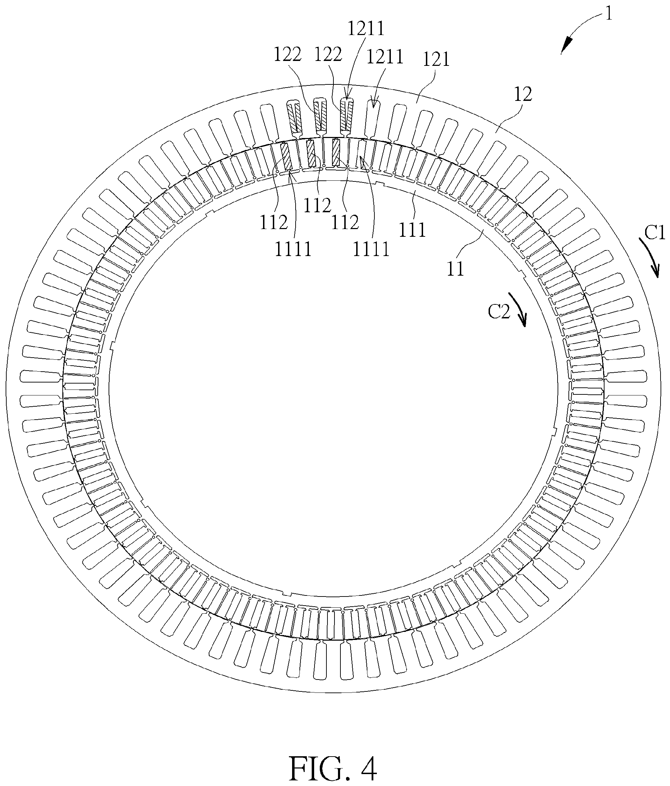

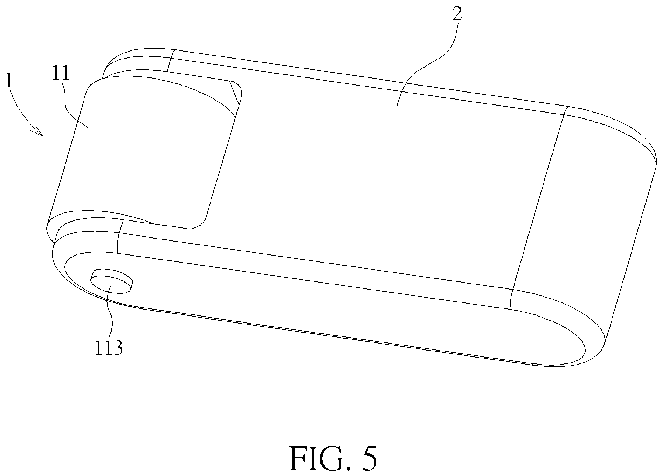

Please refer to FIG. 1 to FIG. 5. FIG. 1 is a schematic diagram of a permanent magnet generator 1 according to an embodiment of the present invention. FIG. 2 is a partial diagram of the permanent magnet generator 1 according to the embodiment of the present invention. FIG. 3 is a partial exploded diagram of the permanent magnet generator 1 according to the embodiment of the present invention. FIG. 4 is a partial sectional diagram of the permanent magnet generator 1 according to the embodiment of the present invention. FIG. 5 is a diagram of the permanent magnet generator 1 in a used state according to the embodiment of the present invention. As shown in FIG. 1 to FIG. 5, the permanent magnet generator 1 includes a rotor structure 11 and a stator structure 12. The rotor structure 11 can rotate or swing relative to the stator structure 12. The permanent magnet generator 1 can utilize a magnetic field variation during a rotating movement or a swinging movement of the rotor structure 11 relative to the stator structure 12 to cause the stator structure 12 to generate an electrical current for electricity generation.

As shown in FIG. 2 to FIG. 4, the stator structure 12 includes a stator body 121, a plurality of stator coils 122 and a shell 123. The stator body 121 is fixedly disposed inside the shell 123. A plurality of stator slots 1211 are formed on the stator body 121. The plurality of stator coils 122 are wrapped around the plurality of stator slots 1211 and for generating the electrical current. Preferably, the stator body 121 can be a circular column and made of magnetically conductive material, such as silicon steel. Specifically, the stator body 121 can be formed by a plurality of stacked ring-shaped silicon steel sheets.

The rotor structure 11 includes a rotor body 111 and a plurality of permanent magnets 112. The rotor body 111 is disposed inside the stator body 121 in a swinging manner or a rotating manner. A plurality of rotor slots 1111 are formed on the rotor body 111. The plurality of permanent magnets 112 are disposed inside the plurality of rotor slots 1111 respectively and configured to cause a magnetic flux variation when the rotor body 111 rotates or swings. Preferably, a number of the plurality of permanent magnets 112 can be identical to a number of the plurality of rotor slots 1111, that is, each of the plurality of permanent magnets 112 is installed inside the corresponding rotor slot 1111. However, in another embodiment, the number of the plurality of permanent magnets can be less than the number of the plurality of rotor slots. Preferably, the rotor body 111 can be a circular column and made of magnetically conductive material, such as silicon steel. Specifically, the rotor body 111 can be formed by a plurality of stacked ring-shaped silicon steel sheets.

A central axis of the stator body 121 is collided with a central axis of the rotor body 111. The plurality of stator slots 1211 are arranged along a circumferential direction C1 of the stator body 121, and the plurality of rotor slots 1111 are arranged along a circumferential direction C2 of the rotor body 111. Preferably, the plurality of stator slots 1211 can be arranged along the circumferential direction C1 of the stator body 121 at equal intervals, and the plurality of rotor slots 1111 can be arranged along the circumferential direction C2 of the rotor body 111 at equal intervals.

It should be noticed that, in the present invention, as shown in FIG. 4, a ratio of the number of the plurality of rotor slots 1111 to a number of the plurality of stator slots 1211 is 8:9. Preferably, the number of the plurality of rotor slots 1111 is at least equal to 64, and the number of the plurality of stator slots 1211 is at least equal to 72. Due to the aforementioned configuration, the permanent magnet generator 1 of the present invention not only can generate electricity stably even in a condition of a low speed and a small angle of the rotating movement or the swinging movement of the rotor body 111 relative to the stator body 121 but also has better efficiency of electricity generation, which facilitates ocean energy conversion. In other words, in the condition of the low speed and the small angle of the rotating movement or the swinging movement of the rotor body 111 relative to the stator body 121, the magnetic flux variation of the permanent magnet generator 1 still can cause the stator structure 12 to generate the electrical current. Therefore, the present invention is suitable for the ocean energy conversion. Specifically, for example, when the number of the plurality of the rotor slots 1111 and the number of the plurality of the stator slots 1211 are equal to 64 and 72, respectively, the stator coils 122 can generate the electrical current as long as the angle of the rotating movement or the swinging movement of the rotor body 111 relative to the stator body 121 reaches 22.5 degrees. Therefore, even if the rotor body 111 is driven by the waves to swing relative to the stator body 121 at a small angle back and forth instead of rotating relative to the stator body 121 along a fixed direction, the permanent magnet generator 1 still can generate electricity. Furthermore, understandably, when the number of the plurality of the rotor slots 1111 and the number of the plurality of the stator slots 1211 are greater than 64 and 72, respectively, the angle of the rotating movement or the swinging movement of the rotor body 111 relative to the stator body 121 which is required for the stator coils 122 to generate the electrical current is less than 22.5 degrees, which allows the permanent magnet generator 1 to generate electricity when the rotor body 111 is driven by the waves to swing relative to the stator body 121 at a smaller angle back and forth.

However, the structure of the permanent magnet generator is not limited to the aforementioned embodiment. It depends on practical demands. For example, in another embodiment, each of the rotor body and the stator body can be formed by a plurality of stacked sector-shaped silicon steel sheets.

Besides, as shown in FIG. 1 to FIG. 3 and FIG. 5, the rotor structure 11 further includes a connecting shaft 113 coupled to the rotor body 111. The connecting shaft 113 passes through the shell 123 and is connected to a driving component 2. The driving component 2 can be driven by ocean currents or waves to drive the rotor body 111 to swing relative to the stator body 121 back and forth along two opposite directions or to rotate relative to the stator body 121 along a fixed direction. Specifically, in this embodiment, the driving component 2 can be a floating component, such as a buoy. However, the present invention is not limited thereto. For example, in another embodiment, the driving component can be an impeller.

In summary, in the present invention, the ratio of the number of the plurality of rotor slots to the number of the plurality of stator slots is 8:9. The number of the plurality of rotor slots and the number of the plurality of stator slots are at least equal to 64 and 72 respectively. Due to the aforementioned configuration, the permanent magnet generator only requires a low speed and a small angle of a rotating movement or a swinging movement of the rotor body relative to the stator body, so as to generate electricity. In other words, in a condition of a low speed and a small angle of the rotating movement or the swinging movement of the rotor body relative to the stator body, a magnetic flux variation of the permanent magnet generator can cause the stator structure to generate an electrical current. Therefore, the present invention is suitable for the ocean energy conversion.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A permanent magnet generator (1) for ocean energy conversion, **characterized in that** the permanent magnet generator (1) comprises:
a stator structure (12) comprising a stator body (121), a plurality of stator slots (1211) being formed on the stator body (121); and
a rotor structure (11) comprising a rotor body (111), the rotor body (111) being disposed inside the stator body (121) in a swinging manner or a rotating manner, a plurality of rotor slots (1111) being formed on the rotor body (111);
wherein a ratio of a number of the plurality of rotor slots (1111) to a number of the plurality of stator slots (1211) is 8:9, the number of the plurality of rotor slots (1111) is at least equal to 64, and the number of the plurality of stator slots (1211) is at least equal to 72.

2. The permanent magnet generator (1) of claim 1, **characterized in that** a central axis of the stator body (121) is coincided with a central axis of the rotor body (111), the plurality of stator slots (1211) are arranged along a circumferential direction (C1) of the stator body (121), and the plurality of rotor slots (1111) are arranged along a circumferential direction (C2) of the rotor body (111).

3. The permanent magnet generator (1) of claim 2, **characterized in that** each of the stator body (121) and the rotor body (111) is a circular column.

4. The permanent magnet generator (1) of any one of claims 1 to 3, **characterized in that** the rotor structure (11) further comprises a plurality of permanent magnets (112) respectively disposed inside the plurality of rotor slots (1111), and a number of the plurality of permanent magnets (112) is identical to the number of the plurality of rotor slots (1111).

5. The permanent magnet generator (1) of any one of claims 1 to 4, **characterized in that** the stator structure (12) further comprises a plurality of stator coils (122) wrapped around the plurality of the stator slots (1211).

6. The permanent magnet generator (1) of any one of claims 1 to 5, **characterized in that** the stator structure (12) further comprises a shell (123), and the stator body (121) is fixedly disposed inside the shell (123).

7. The permanent magnet generator (1) of claim 6, **characterized in that** the rotor structure (11) further comprises a connecting shaft (113) coupled to the rotor body (111), and the connecting shaft (113) passes through the shell (123).

8. The permanent magnet generator (1) of any one of claims 1 to 7, **characterized in that** the stator body (121) is formed by a plurality of silicon steel sheets.

9. The permanent magnet generator (1) of any one of claims 1 to 8, **characterized in that** the rotor body (111) is formed by a plurality of silicon steel sheets.
